# EUROPÄISCHE PATENTSCHRIFT

(11) **EP 1 929 189 B1**
(45) Veröffentlichungstag und Bekanntmachung des Hinweises auf die Patenterteilung: **24.02.2010**
(21) Anmeldenummer: 06752908.1
(22) Anmeldetag: 05.07.2006
(51) Int. Cl.: F16J 15/44, F04B 15/08, F04B 53/16

(54) **KOLBENSTANGENDICHTUNG AN PUMPEN FÜR CRYOGENE MEDIEN**
PISTON ROD SEAL ON PUMPS FOR CRYOGENIC MEDIA
JOINT POUR TIGE DE PISTON SUR DES POMPES A FLUIDES CRYOGENIQUES

(30) Priorität: 15.07.2005 CH 11812005
(43) Veröffentlichungstag der Anmeldung: 11.06.2008
(73) Patentinhaber: Fives Cryomec AG, 4123 Allschwil (CH)
(72) Erfinder: DROUVOT, Philippe, F-68730 Blotzheim (FR); KOERPER, Michel, F-68510 Uffheim (FR)
(74) Vertreter: Schneider Feldmann AG Patent- und Markenanwälte
(86) Internationale Anmeldenummer: PCT/CH2006/000357
(87) Internationale Veröffentlichungsnummer: WO 2007/009278

(56) Entgegenhaltungen:
- GB-A- 1 396 230
- US-A- 2 706 665
- US-B1- 6 843 481

## Beschreibung

Die vorliegende Erfindung betrifft eine Dichtung für die Kolbenstange einer Pumpe für cryogene Medien. Unter cryogenen Medien werden im folgenden tiefkalte Flüssigkeiten ab ca. -10°C verstanden, also zum Beispiel die Bestandteile der Luft in Flüssigform wie Stickstoff (N₂) auf unter -196°C, Sauerstoff (O₂) auf unter -183°C, Argon (Ar) auf unter -186°C, Kohle Säure (CO₂) auf unter -20°C sowie auch Wasserstoff (H₂) bei -253°C, etc. Im Fachjargon werden die genannten Elemente in flüssiger Form mit Liquid Nitrogen (LiN), Liquid Oxygen (LOx), Liquid Argon (LAr), Liquid Hydrogen (LH2) und anderen Gasen bezeichnet.

Solche tiefkalten Flüssigkeiten werden im grosstechnischen Massstab hergestellt, indem die Atmosphärenluft durch Abkühlung und Reinigung in ihre Bestandteile zerlegt wird oder im Fall von Wasserstoff Wasser in seine Bestandteile zerlegt wird. Die einzelnen reinen und flüssigen Bestandteile werden dann in speziellen Cryotanks gelagert und für den Umschlag mit Lkw transportiert, welche mit speziell isolierten Cryotanks ausgerüstet sind. Durch einen gewissen unvermeidbaren Wärmeeintrag aus der Umgebung verdampft fortlaufend ein Teil der sich ja nahe beim Siedezustand befindlichen cryogenen Flüssigkeit.

Beim Abfüllen von Hochdruckflaschen mit cryogenen Flüssigkeiten, also beim Abfüllen von Flaschen aus einem Tank, wird die cryogene Flüssigkeit, zum Beispiel Ar, N₂, O₂, CO₂, CH₄ etc. auf einem Druck von ca. 200 bar in einen atmosphärischen Verdampfer gepumpt und gelangt dann gasförmig in die abzufüllende Flasche. Diese Flaschen sind zum Beispiel in horizontaler Lage auf einem Lkw montiert und werden sodann im Strassentransport an den Bestimmungsort gebracht und dort in stationäre Drucktanks oder -flaschen abgefüllt. Die Schwachstelle einer solchen Abfüllanlage ist stets die Pumpe für die cryogene Flüssigkeit.

Die Pumpen sind als Kolbenpumpen konstruiert, deren Kolben dann in beiden Richtungen Cryoflüssigkeit fördert, sodass ein Saugtakt vermieden wird. Bei einer Kolbenpumpe muss aber grundsätzlich eine Drehbewegung in eine Hin- und Herbewegung umgewandelt werden, wozu eine Pleuelstange dient. Der Kolben vollführt dann eine im Prinzip rein translatorische Bewegung und ist je nach Konstruktion über eine mehr oder weniger lange Distanz in einem Zylinder geführt (siehe US-A-2706665). Er kann auch am Ende einer gesonderten Kolbenstange sitzen, die dann ihrerseits in einem Zylinderrohr geführt ist, in welchem diese Kolbenstange abgedichtet ist, um gerade bei cryogenen Anwendungen eine maximale Wärmeabdichtung zu erzielen. Die Abdichtung erfolgt im hinteren Bereich der Kolbenstange. Diese ist konventionell über eine Hut-Manschetten oder Lippendichtungpackung gegenüber dem Zylinderrohr abgedichtet. Diese Packung besteht aus zwei Laternenringen bzw. O-Ringen, zwischen denen eine Anzahl Stützringe angeordnet sind, wobei jeder eine Hutmanschette oder Lippendichtung trägt. Auf der Kolbenseite der Hut-Manschettenpackung ist ausserdem ein Stapel aus Tellerfedern eingebaut, die auf der Kolbenseite auf einen Stütz-O-Ring drücken, indem sie von einer Einsatzbüchse belastet werden. Anstelle einer Hut-Manschettenpackung wurden bisher auch rohrförmige Teflondichtungen eingesetzt, die fest in einer Ausnehmung im Zylinderrohr sitzen und in welcher die Kolbenstange geführt ist. Die Kolbenstange ragt auf der Hinterseite aus der Kolben-Zylindereinheit heraus und wird von dort aus mechanisch bzw. hydraulisch betätigt. Mit den Teflondichtungen macht man bessere Erfahrungen als mit den Hutmanschettenpackungen, was die Abdichtung anbetrifft, jedoch lässt die Standzeit zu wünschen übrigen. Weil die Kolbenstange vom Pleuel nicht genau in translatorischer Richtung mit Kraft beaufschlagt wird, sondern diese translatorische Bewegung bloss durch die Führung im Zylinderrohr erzwungen wird, beobachtet man an diesen Dichtungen nach einer gewissen Zeit, dass die Dichtung an beiden Enden ausgeschlagen ist, wobei das an einem Ende jeweils deutlicher bemerkbar macht. Die Standzeiten der Dichtungen werden durch diesen Umstand stark reduziert und liegen bei solchen cryogenen Pumpen bei ca. 1'500 Stunden, im besten Fall bei 4'000 Stunden. Nach Erreichen dieser Zeitperiode muss die Pumpe demontiert und die Dichtung ersetzt werden, was selbstverständlich Kosten verursacht, nicht nur für das Ersetzen der Dichtung, sondern auch wegen ihres Ausfalls im Betrieb. Mehr und mehr gibt es auch Anwendungen, wo ein kontinuierliches Pumpen gefragt ist. Hierzu sollte man mindestens mit einer Standzeit der Pumpe im Dauerbetrieb von zwölf Monaten aufwarten können, besser aber mit noch längeren Standzeiten.

Die Aufgabe der vorliegenden Erfindung ist es deshalb, eine Kolbenstangendichtung an Pumpen für cryogene Medien zu schaffen, die bei guter Wärmedichtung eine wesentlich höhere Standzeit bietet, sodass die Wartungsintervalle verlängert werden und der Betrieb mit solchen Pumpen in der Effizienz gesteigert wird.

Diese Aufgabe wird gelöst von einer Kolbenstangendichtung an Pumpen für cryogene Medien mit einer Kolbenstange, deren Abdichtung gegenüber dem Zylinder aus mindestens einer rohrförmigen Labyrinth-Dichtung im Zylinder besteht, in welcher die Kolbenstange translatorisch hin und her läuft, und die sich dadurch auszeichnet, dass die rohrförmige Labyrinth-Dichtung im Zylinder in radialer Richtung allseits gezielt Spiel aufweist, und dass jede Stirnseite der rohrförmigen Labyrinth-Dichtung mittels einer ringförmigen Dichtung gegenüber dem Zylinder abgedichtet ist.

In den Zeichnungen ist eine beispielsweise Kolbenstangendichtung gezeigt und sie wird anschließend erläutert.

Es zeigt:
- Figur 1:: Eine Kolbenpumpe für cryogene Medien in einem Längsschnitt dargestellt, mit der Kolbenstangendichtung in Form einer rohrförmigen Labyrinth-Dichtung;
- Figur 2:: Einen Ausschnitt aus der Kolbenpumpe mit der Kolbenstangendichtung;
- Figur 3:: Die rohrförmige Labyrinth-Dichtung ohne Dichtringe in perspektivischer Ansicht dargestellt;
- Figur 4:: Die Kolbenstangendichtung in einer zweiten Ausführung mit nur einer Labyrinthdichtung;
- Figur 5:: Die Kolbenstangendichtung in einer dritten Ausführung mit zwei Labyrinthdichtung unter Einsatz von lippenförmigen Dichtungen.
- Figur 6:: Die Kolbenstangendichtung in einer vierten Ausführung, welche zeigt dass die außen Abdichtung der Labyrinthdichtung direkt angebracht ist.

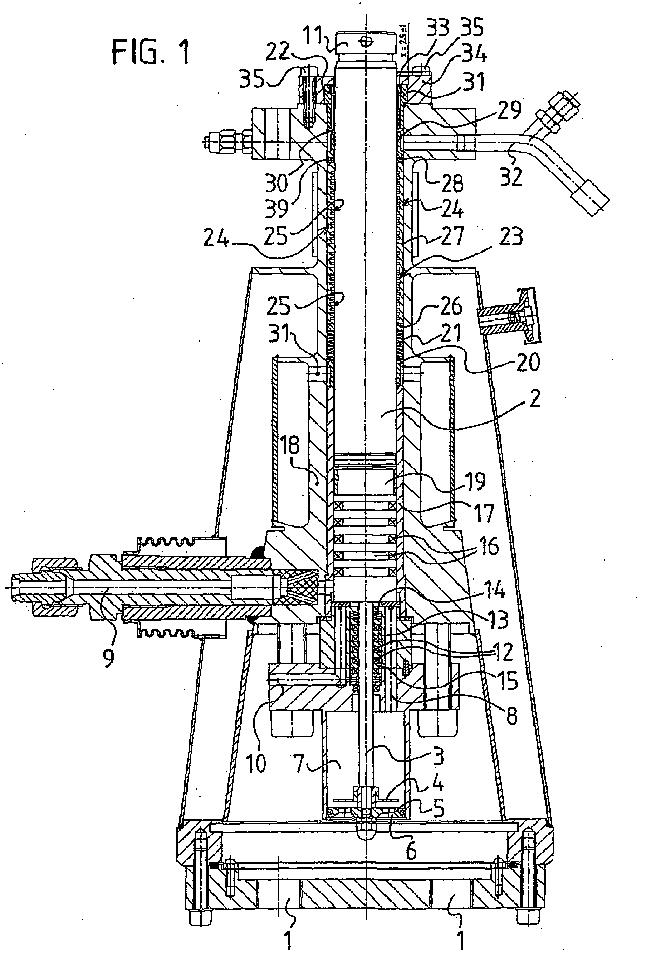

Die Figur 1 zeigt das kalte Ende einer Kolbenpumpe, welches im Betrieb mit cryogener Flüssigkeit gefüllt ist. Auf der Unterseite strömt die cryogene Flüssigkeit durch die Öffnungen 1 in das Innere der Pumpe. Die Kolbenstange 2 ist an ihrem vorderen Ende mit einem Ladekolben 3 verbunden, auf dem eine schwebende Ventilplatte 4 sitzt, die mit dem Ventilteller 5 und dessen Löchern 6 zusammenwirkt. Wenn der Ladekolben 3 sich nach unten bewegt, so kann cryogene Flüssigkeit durch die Löcher 6 des sich nach vorne schiebenden Ventiltellers 5 in die Schöpfkammer 7 hineinströmen. Wenn der Ladekolben 2 sich nach oben bewegt, so verschließt die schwebende Ventilplatte 4 diese Löcher 6 im Ventilteller 5 und der vom Ladekolben 3 nach oben gezogene Ventilteller 5 drückt die in der Schöpfkammer 7 gefangene cryogene Flüssigkeit durch die Förderleitung 8 und schließlich durch die Zapfleitung 9 aus der Pumpe. Allfällige längs des Ladekolbens 3 nach oben leckende cryogene Flüssigkeit wird über die Leckageleitung 10 in die Pumpe zurückgeführt.

Das hier auf der oberen Seite der Abbildung liegende Ende 11 der Kolbenstange 2 ist mit einem hier nicht dargestellten Triebwerk verbunden, das von einem Motor antreibbar ist. Die Kolbenstange 2 und auch der Ladekolben 3 sind gegen das kalte Ende hin mit mehreren Kolbenringen abgedichtet. Zunächst sind am Ladekolben 3 eine Anzahl Kolbenringe 12 sichtbar. Jeder dieser Kolbenringe 12 sitzt in einem Haltering 13 und diese Halteringe 13 werden von Tellerfedern 14 aneinandergedrückt und abgestützt. Die Tellerfedern 14 sorgen für Anpressdruck der Kolbenringe 12 am Ladekolben 3. Die trotzdem längs des Ladekolbens 3 allfällig entweichende Flüssigkeit fliesst durch die Lecklageleitung 10 in das Pumpeninnere zurück. An der Kolbenstange 2 sind weitere Kolbenringe 16 vorhanden, welche diese gegenüber der Zylinderbüchse 17 im Innern des Zylinders 18 abdichten. Dann folgt ein Führungsring 19. Am oberen Ende der Zylinderbüchse 17 ist ein Laternenring 20 mit radialen Löchern eingelegt, die mit Leckagebohrungen 31 im Zylinder 18 kommunizieren. Oberhalb des Laternenrings 20 folgt ein Stapel Tellerfedern 21. Auf diesen liegt ein Distanzring 26 auf. Nun folgt in neuartiger Weise mindestens eine rohrförmige Labyrinth-Dichtung 23.

Im hier gezeigten Beispiel sind zwei solche rohrförmige Labyrinth-Dichtungen 23,24 tandemartig aneinandergereiht und sie sind im Zylinder 18 bewusst mit etwas radialem Spiel gelagert, mit zum Beispiel etwa 0.5mm bis 1mm Spiel. Bei diesen hier in zwei Exemplaren von eingesetzten rohrförmigen Labyrinth-Dichtungen 23,24 handelt es sich um Formstücke aus der Teflon Familie mit einem Anteil Glasfasern zur Verbesserung ihrer Zugfestigkeit. Die Aussenseite dieser rohrförmigen Labyrinth-Dichtungen 23,24 ist glatt, während die Innenseite mit vertieften Rillen 25 versehen ist, welche ein Labyrinth bilden und damit für Gasverwirbelungen sorgen. Die oberen Aussenränder der rohrförmigen Labyrinth-Dichtungen 23,24 sind hier angefast, sodass Raum für die Aufnahme von dort hineinpassenden O-Ringen 27,28 geschaffen wird. Über dem oberen O-Ring 28 ist ein weiterer Laternenring 29 mit radialen Löchern eingelegt. Außerhalb des Laternenrings 29 mündet die Leckageleitung 32 nach außen. Sobald flüssiges Medium durch diese als Leckagesonde wirkende Leitung 32 nach aussen austritt, zeigt das an, dass die Kolbenstange 2 nicht mehr richtig abgedichtet ist und die Pumpe revidiert werden muss. Oben auf dem Laternenring 29 liegt eine Tellerfeder 30 auf, auf welcher eine Führungshülse 31 sitzt. Es handelt sich dabei um einen sogenannten Sleeve Holder, das heißt um eine Selbstschmierende DU-Büchse aus Teflon und Bronze. Auf dieser Führungshülse 31 ist ein Stützring 32 aufgelegt, in dessen Innenseite eine lippenförmige Dichtung 33 eingelegt ist. Am Schluss ist eine Montagscheibe 34 mittels Schrauben 35 aufgespannt, mittels welcher die verbauten Tellerfedern 21 und 30 belastet werden. Durch das Aufschrauben der Montagescheibe 34 werden die Tellerfedern 21 zusammengedrückt und entsprechend die O-Ringe 27,28 an die Kolbenstange 2 gepresst. Die Kolbenstange 2 passt genau in das Innere dieser rohrförmigen Labyrinth-Dichtungen 23,24 ein und gleitet darin passgenau hin und her. Durch die von der translatorischen Achse abweichende Kraftbeaufschlagung der Kolbenstange 2 durch die Pleuelstange ist begründet, dass die herkömmlich passgenau und ohne Spiel eingesetzten rohrförmigen Dichtungen mit der Zeit ausgeschlagen wurden. Indem die Labyrinthdichtungen 23,24 nun bewusst mit etwas radialem Spiel im Zylinder 18 gelagert sind, können sie um ein ganz geringes Mass mitgehen und somit die ungleichen Führungskräfte kompensieren, die aufgrund der wechselnden Kraftbeaufschlagungsrichtungen auftreten. Dadurch wird die Ausschlagung vermieden. Die Führungskräfte werden nur noch vom Zylinder 18 aufgebracht und nicht mehr von der rohrförmigen Dichtung, welche natürlich weit weniger hart und widerstandsfähig ist als der Zylinder 18. Versuche zeigten, dass eine derart konzipierte Dichtung Standzeiten von bis zu 8'000 Stunden erbringt, im Vergleich zu herkömmlichen Dichtungen ohne Spiel im Zylinder 18, die es schlimmstenfalls auf bloß 1'500 Stunden brachten, bestenfalls auf höchstens 4'000 Stunden.

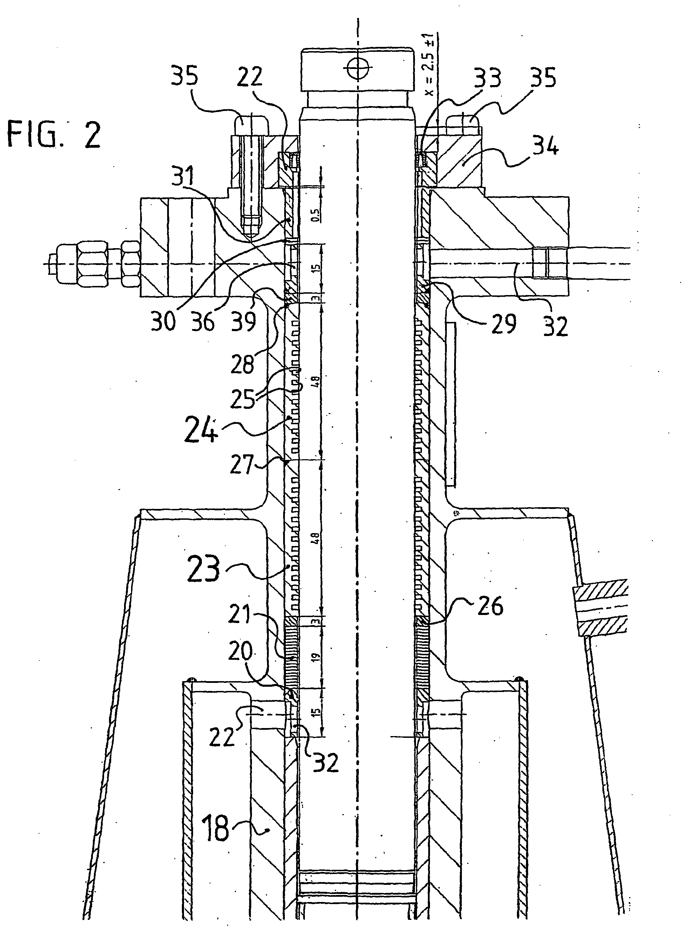

Die Figur 2 zeigt einen vergrößerten Ausschnitt aus der Kolbenpumpe mit dieser speziellen Kolbenstangendichtung, die aus zwei rohrförmigen Labyrinthdichtungen 23,24 besteht, die mit etwas Spiel eingelegt sind. Oberhalb des Laternenrings 20 folgt der Stapel Tellerfedern 21. Auf diesem Stapel liegt ein Distanzring 26 auf, gefolgt von den neuartigen, rohrförmigen Labyrinth-Dichtungen 23,24, die im Zylinder 18 bewusst mit etwas radialem Spiel gelagert sind. Wie man erkennt, sind die oberen Außenränder der rohrförmigen Labyrinth-Dichtungen 23,24 angefasst, sodass Raum für die Aufnahme von dort hineinpassenden O-Ringen 27,28 geschaffen wird. Über dem oberen O-Ring 28 ist ein weiterer Laternenring 29 mit radialen Löchern 36 eingelegt, die mit der Leckageleitung 32 kommunizieren, wodurch eine Leckagesonde gebildet ist. Oben auf dem Laternenring 29 liegen die zwei Tellerfedern 30 auf, auf welchen eine Führungshülse 31 sitzt. Auf der Führungshülse 31 ist der Stützring 22 aufgelegt, in dessen Innenseite die lippenförmige Dichtung 33 erkennbar ist. Die Montagscheibe 34 ist mittels der Schrauben 35 aufgespannt.

Die Figur 3 zeigt die rohrförmige Dichtung 23,24 mit ihrer glatten Außenseite und den Rillen 25 auf ihrer Innenseite. Diese Dichtung hat zum Beispiel eine Länge von 48mm bei einem Außendurchmesser von 44mm und einer Wandstärke von 4.5mm. Die Rillen 25 weisen eine Tiefe von ca. 0.5 bis zu 3mm auf und sind 1 bis 5mm voneinander beabstandet. Diese Masse sind allerdings bloss als Beispiele zu verstehen und können in spezifischen Ausführungen abweichen. An beiden Enden sind die Außenränder der Dichtung 23,24 angefasst. Diese Anfassungen 37 bilden eine Schulter für die anschließenden O-Ringe. Die Verhältnisse zwischen Innendurchmesser, Länge und Wandstärke der Labyrinth-Dichtung 23,24 sind zum Beispiel dergestalt, dass die rohrförmige Labyrinth-Dichtung 23,24 für einen Kolbenstangen-Durchmesser von 35mm eine Länge von ca. 50mm aufweist, und eine Wandstärke von ca. 4mm. Es ist klar, dass diese Maßverhältnisse bloß als Beispiel dienen und den Umständen angepasst werden können.

Die Figur 4 zeigt die rohrförmige Labyrinth-Dichtung 23 im Zylinder 18 in einer vergrößerten Darstellung, wobei nur eine einzelne Labyrinth-Dichtung 23 verbaut ist. Auf beiden Seiten sind die O-Ringe 27,28 zu erkennen, die an den Anfassungen 37 anliegen. Auf der jeweils anderen Seite liegen die O-Ringe 27,28 an den Stirnseiten 38 der Distanzringe 26,39 an. An den oberen Distanzring 39 schließt ein Laternenring 29 and, an den unteren ein Tellerfederpaket 21.

Die Figur 5 zeigt eine weitere mögliche Konfiguration dieser Kolbenstangen-Dichtung. Hier sind zwei rohrförmige Labyrinth-Dichtungen 23,24 mit Abstand voneinander angeordnet. Dazwischen ist ein Distanzring 40 mit geringfügig größerem Innendurchmesser als die rohrförmigen Labyrinth-Dichtungen 23,24 angeordnet. Beide Dichtungen 23,24 weisen anstelle von Anfassungen je eine ringförmige Ausnehmung 41 an ihren äusseren Ecken auf, sodass je eine Schulter gebildet wird. Die der Pleuelstange zugewandte, hier obere Labyrinth-Dichtung 24 trägt mit diesen Schultern 41 je einen Lippen-Dichtungsring 42. Dieser Lippen-Dichtungsring 42 bildet im Querschnitt zwei Schenkel, welche gegen die Stirnfläche 43 der anliegenden Distanzringe 39,40 hin gerichtet sind, an welcher diese rohrförmige Labyrinth-Dichtung 24 anliegt. Außen sind die Lippen-Dichtungsringe 42 mit der Außenseite der rohrförmigen Labyrinth-Dichtung 24 bündig. Wird die rohrförmige Labyrinth-Dichtung 24 beim translatorischen Durchgleiten der Kolbenstange im Rahmen ihres Spiels im Zylinder 18 radial leicht in hin und herbewegt, so geben die Schenkel dieser Lippen-Dichtungsringe 42 entsprechend elastisch nach. Bei der zweiten, anschließenden rohrförmigen Labyrinth-Dichtung 23 sind die Lippen-Dichtungsringe 42 so gestaltet, dass sie das Spiel der Labyrinth-Dichtung 23 und dem Zylinder 18 in radialer Richtung vollständig ausfüllen. Diese Labyrinth-Dichtung 23 wird sich bei bewegender Kolbenstange weniger stark in radialer Richtung bewegen. Sie kann sich indessen ebenfalls im Rahmen ihres Spiels bewegen, und in diesem Fall nimmt der Lippen-Dichtungsring 42 diese Bewegung durch elastische Kompression auf.

Die Figur 6 zeigt eine weitere mögliche Ausführung. Die Kolbenstangendichtung zeigt, dass die Außen-Abdichtung in Form von kleinen Lippen 42 direkt aus der Labyrinthdichtung selbst herausgearbeitet ist. Diese Variante ermöglicht es, ohne weitere Dichtungen auszukommen. Dieser runde lippenförmige Teil 42 wird direkt an der Kolbenstangendichtung bearbeitet. Diese Lippe bzw. diese Lippen 42 dabei so bearbeitet, dass sie eine gewisse Flexibilität für den schwingenden Kolben erlauben. Zwischen der Aussenseite der Labyrinthdichtung und dem Zylinder gibt es etwas Spiel, sodass die Labyrinthdichtung mit der seitlichen Schwingung des Kolbens mitgehen kann.

### Ziffernverzeichnis

- 1: Untere Öffnungen der Pumpe
- 2: Kolbenstange
- 3: Ladekolben
- 4: Ventilplatte
- 5: Ventilteller
- 6: Löcher in Ventilteller
- 7: Schöpfraum
- 8: Förderleitung
- 9: Zapfleitung
- 10: Leckageleitung
- 11: Ende 11 der Kolbenstange
- 12: Kolbenringe an Ladekolben
- 13: Halteringe für Ladekolbenringe
- 14: Tellerfedern bei Ladekolben
- 15: Stützring für Ladekolbenringe
- 16: Kolbenringe Kolbenstange
- 17: Zylinderbüchse im Innern des Zylinders
- 18: Zylinder
- 19: Führungsring
- 20: Laternenring
- 21: Tellerfedern
- 22: Leckagebohrungen im Laternenring
- 23: untere Labyrinthdichtung
- 24: obere Labyrinthdichtung
- 26: Distanzring
- 27: O-Ring
- 28: O-Ring
- 29: Laternenring mit radialen Löchern
- 30: Tellerfeder
- 31: Führungshülse
- 32: Leckageleitung
- 33: lippenförmige Dichtung
- 34: Montagscheibe
- 35: Schrauben
- 36: radiale Löchern
- 37: Anfasungen
- 38: Stirnseiten 38 der Distanzringe
- 39: Distanzring
- 40: Distanzring
- 41: ringförmige Ausnehmung
- 42: Lippen-Dichtungsring
- 43: Stirnfläche

## Patentansprüche

1. Kolbenstangendichtung an Pumpen für cryogene Medien mit einer Kolbenstange (2), deren Abdichtungsvorrichtung gegenüber dem Zylinder (18) aus mindestens einer rohrförmigen Labyrinthdichtung (23, 24) mit Ringnuten (25) auf der Innenseite und einer glatten äusseren Oberfläche im Zylinder (18) besteht, in welcher die Kolbenstange (2) translatorisch hin und her läuft, wobei die rohrförmige Labyrinthdichtung 23, 24) im Zylinder (18) in radialer Richtung allseits Spiel aufweist, **dadurch gekennzeichnet, dass** die rohrförmige Labyrinthdichtung in axialer Richtung zwischen Tellerfedern unter Vorspannung gehalten ist, so dass jede Stirnseite der rohrförmigen Labyrinthdichtung (23, 24) mittels einer ringförmigen Dichtung 27, 28, 42) gegenüber dem Zylinder (18) abgedichtet ist.

2. Kolbenstangendichtung an Pumpen für cryogene Medien nach Anspruch 1, **dadurch gekennzeichnet, dass** zwei rohrförmige Labyrinthdichtungen (23, 24) in Serie angeordnet sind.

3. Kolbenstangendichtung an Pumpen für cryogene Medien nach Anspruch 1, **dadurch gekennzeichnet, dass** die rohrförmige Labyrinthdichtung (23, 24) aus der PTFE Familie besteht, mit einem eventuell Anteil Glasfaser.

4. Kolbenstangendichtung an Pumpen für cryogene Medien nach Anspruch 1, **dadurch gekennzeichnet, dass** die Verhältnisse zwischen Innendurchmesser, Länge und Wandstärke der Labyrinthdichtung 23, 24) dergestalt sind, dass die rohrförmige Labyrinthdichtung 23, 24) für einen Kolbenstangen-Durchmesser von 35 mm eine Länge von ca. 50 mm aufweist und eine Wandstärke von ca. 4mm.

5. Kolbenstangendichtung an Pumpen für cryogene Medien nach Anspruch 1, **dadurch gekennzeichnet, dass** die rohrförmige Labyrinthdichtung (23, 24) angefaste Aussenränder (37) aufweist, und dass auf der Anfasung (37) ein O-Ring (27, 28) eingelegt ist.

6. Kolbenstangendichtung an Pumpen für cryogene Medien nach Anspruch 1, **dadurch gekennzeichnet, dass** die rohrförmige Labyrinthdichtung (24) an beiden Enden aussen eine rundumlaufende ringförmige, im Querschnitt rechteckige Ausnehmung (41) aufweist, auf welcher passgenau ausfüllend je ein Lippen-Dichtungsring (42) sitzt, der im Querschnitt ein U-förmiges Profil aufweist, wobei die beiden Schenkel des U's in Richtung zur Stirnwand eines anliegenden Distanzringes (39, 40) im Zylinder (18) zeigen.

7. Kolbenstangendichtung an Pumpen für cryogene Medien nach einem der Ansprüche 1 - 6, **dadurch gekennzeichnet, dass** die Schenkel des Lippen-Dichtungsringes (42) länger als die Tiefe der Ausnehmung (41) sind.

8. Kolbenstangendichtung an Pumpen für cryogene Medien nach Anspruch 1, **dadurch gekennzeichnet, dass** an der rohrförmigen Labyrinthdichtung (23, 24) direkt eine Dichtlippe (42) ausgearbeitet ist, so dass keine zusätzliche Dichtung nötig ist.

## Claims

1. A piston rod seal on pumps for cryogenic media with a piston rod (2,) whose sealing device against the cylinder (18) consists of at least one tubular labyrinth seal (23,24) with ring grooves (25) on the inside and a smooth outer surface in the cylinder (18), in which the piston rod (2) translatorically runs to and fro, wherein the tubular labyrinth seal (23, 24) in the cylinder (18) in radial direction has play on all sides, **characterized in that** the tubular labyrinth seal in axial direction is held under preload between disc springs, so that each face end of the tubular labyrinth seal (23, 24) is sealed against the cylinder (18) by means of a ring-shaped seal(27, 28, 42).

2. The piston rod seal on pumps for cryogenic media according to Claim 1, **characterized in that** two tubular labyrinth seals (23, 24) are arranged in series.

3. The piston rod seal on pumps for cryogenic media according to Claim 1, **characterized in that** the tubular labyrinth seal (23, 24) consists of the PTFE family, with a possible component of glass fibre.

4. The piston rod seal on pumps for cryogenic media according to Claim 1, **characterized in that** the ratios between inner diameter, length and wall thickness of the labyrinth seal (23, 24) are such that the tubular labyrinth seal (23, 24) for a piston rod diameter of 35mm has a length of approximately 50mm and a wall thickness of approximately 4mm.

5. The piston rod seal on pumps for cryogenic media according to Claim 1, **characterized in that** the tubular labyrinth seal (23, 24) comprises chamfered outer edges (37), and that on the chamfer (37) an O-ring (27, 28) is inserted.

6. The piston rod seal on pumps for cryogenic media according to Claim 1, **characterized in that** the tubular labyrinth seal (24) on both ends comprises a circumferential ring-shaped clearance (41) rectangular in cross section on the outside, on which precisely fitting a lip sealing ring (42) each is seated filling out said clearance, which has a U-shaped profile in cross section, wherein the two legs of the U point in the direction of the face wall of an abutting spacer ring (39, 40)in the cylinder, (18).

7. The piston rod seal on pumps for cryogenic media according to any one of the Claims 1 - 6, **characterized in that** the legs of the lip sealing ring (42), are longer than the depth of the clearance (41).

8. The piston rod seal on pumps for cryogenic media according to Claim 1, **characterized in that** on the tubular labyrinth seal (23, 24) a sealing lip (42) is directly produced, so that no additional seal is required.

## Revendications

1. Garniture de tige de piston sur des pompes pour fluides cryogènes dotée d'une tige de piston (2), dont le dispositif d'étanchéité par rapport au cylindre (18) comprend au moins un joint à labyrinthe (23, 24) tubulaire avec des rainures annulaires (25) sur le côté intérieur et une surface extérieure lisse dans le cylindre (18), dans lequel la tige de piston (2) fait des aller et retour par translation, le joint à labyrinthe (23, 24) tubulaire présentant du jeu de tous côtés dans le cylindre (18) dans le sens radial, **caractérisé en ce que** le joint à labyrinthe tubulaire est maintenu sous pré-tension dans la direction axiale entre des ressorts à disques, de sorte que chaque face frontale du joint à labyrinthe (23, 24) tubulaire est étanchéifiée au moyen d'un joint (27, 28, 42) annulaire par rapport au cylindre (18).

2. Garniture de tige de piston sur des pompes pour fluides cryogènes selon la revendication 1, **caractérisé en ce que** deux joints à labyrinthe (23, 24) tubulaires sont disposés en série.

3. Garniture de tige de piston sur des pompes pour fluides cryogènes selon la revendication 1, **caractérisé en ce que** le joint à labyrinthe (23, 24) tubulaire est à base de la famille des PTFE, avec une éventuelle fraction de fibre de verre.

4. Garniture de tige de piston sur des pompes pour fluides cryogènes selon la revendication 1, **caractérisé en ce que** les rapports entre le diamètre intérieur, la longueur et l'épaisseur de paroi du joint à labyrinthe (23, 24) sont tels que le joint à labyrinthe (23, 24) tubulaire pour un diamètre de tige de piston de 35 mm présente une hauteur d'environ 50 mm et une épaisseur de paroi d'environ 4 mm.

5. Garniture de tige de piston sur des pompes pour fluides cryogènes selon la revendication 1, **caractérisé en ce que** le joint à labyrinthe (23, 24) tubulaire présente des bords extérieurs (37) biseautés et **en ce qu'**un joint torique (27, 28) est mis en place sur le biseautage (37).

6. Garniture de tige de piston sur des pompes pour fluides cryogènes selon la revendication 1, **caractérisé en ce que** le joint à labyrinthe (24) tubulaire présente sur les deux extrémités à l'extérieur un évidement (41) périphérique circulaire, de forme annulaire, rectangulaire en section, sur lequel à chaque fois une bague d'étanchéité à lèvre (42) est placée de façon ajustée et en le remplissant, qui présente un profil en U en section, les deux branches du U étant orientées en direction de la paroi avant d'une bague d'espacement (39, 40) appliquée dans le cylindre (18).

7. Garniture de tige de piston sur des pompes pour fluides cryogènes selon l'une quelconque des revendications 1 à 6, **caractérisé en ce que** les branches de la bague d'étanchéité à lèvre (42) sont supérieures à la profondeur de l'évidement (41).

8. Garniture de tige de piston sur des pompes pour fluides cryogènes selon la revendication 1, **caractérisé en ce qu'**une lèvre d'étanchéité (42) est élaborée directement sur le joint à labyrinthe (23, 24) tubulaire, de sorte qu'aucun joint supplémentaire n'est nécessaire.
